# EUROPEAN PATENT APPLICATION

(11) **EP 2 339 148 A2**
(43) Date of publication of application: **29.06.2011**
(21) Application number: 10193944.5
(22) Date of filing: 07.12.2010
(51) Int. Cl.: F02C 9/26

(54) **Method and system for controlling a fuel flow to a turbomachine**

(30) Priority: 23.12.2009 US 646132
(71) Applicant: General Electric Company, Schenectady, NY 12345 (US)
(72) Inventor: Byrd, Douglas S., Greenville, SC 29615 (US); Law, Joseph R., Greenville, SC 29615 (US)
(74) Representative: Bedford, Grant Richard

(57) **Abstract**

Method of controlling a fuel flow to a turbomachine and turbine control system. The turbine control system (190) receives a plurality of operating data. The turbine control system (190) utilizes at least one algorithm, which applies an energy balance to the received operating data. The operating data may include, but is not limited to, airflow data, data from the fuel system (160), data related to the shaft work, exhaust data, and data related to the heat loss. This energy balance is used to determine the required mass flow rate.

## Description

The present invention relates generally to the start-up operation of a turbomachine; and more particularly to a method of enhancing the fuel flow during the ignition mode associated with the start-up operation of the turbomachine.

"Fast Start" may be considered an operating mode requiring a turbomachine to export a load, capable of emissions complaint operation, within a certain time after an operator initiates a start of that turbomachine. Fluctuating energy demand is a major factor in determining when the turbomachine operates. Turbomachines are commonly idled until sufficient demand requires operation. When demand requires operation, the turbomachine performs a start-up process before exporting the desired energy (electricity, mechanical torque, steam, and the like).

Peaking or simple cycle plants can execute Fast Starts and are then replaced by efficient generation over a longer period. Moreover, the current assignee of the application, General Electric Company, has a portfolio of combined cycle (CC) power plants (CCPP), such as, but not limited to, those disclosed in US27113562A1, entitled "Method and Apparatus for Starting Up Combined Cycle Power Systems". In addition, US04207864, entitled "Damper"; US04208882, entitled "Startup Attemperator"; US04598551, entitled "Apparatus and Method for Controlling Steam Turbine Operating Conditions During Starting and Loading". Also, US05361585, entitled "Steam Turbine Split Forward Flow"; US05412936, entitled "Method of Effecting Start-up of a Cold Steam Turbine System in a Combined Cycle Plant"; US06626635, entitled "System for Controlling Clearance Between Blade Tips and a Surrounding Casing in Rotating Machinery". Reference to these commonly assigned patents and patent applications can provide further insight into the scope of the Fast Start technology and the subject matter herein.

The start-up process of some known turbomachines typically involves a plurality modes occurring at different operating speeds. These modes include, but are not limited to: a purge, an ignition, a warm-up, and acceleration to a primary operating speed. The ignition mode is critical to a successful start-up.

Currently known methods of controlling the ignition mode incorporate a pre-determined fuel flowrate from an assumed heating value of the fuel. This assumed heating value is commonly based on the fuel used during the commissioning of the turbomachine. These methods operate under an open loop methodology since current heating value is not determined during the ignition mode. Some turbomachine operators use a Gas Chromatograph (GC) device to determine the current heating value. However, the GC is a very expensive device and requires routine calibration and maintenance.

There are a few concerns with the currently known methods of controlling the ignition mode. The assumed/default heating value may not be accurate. The heating value of the present fuel supplied to the turbomachine may differ from the fuel used during the commissioning process. This may cause the ignition mode and the overall start-up process to fail.

Therefore, there is a desire for an improved method of controlling the ignition mode during the start-up of the turbomachine. The method should provide a closed loop methodology that adjusts the fuel flow based on a current heating value. This method should increase the probability of a successful ignition mode and start-up. This can assist the turbomachine with meeting the requirements of Fast Start operation.

In an embodiment of the present invention, a method of controlling a fuel flowing to a combustion system during a start-up process of a turbomachine, the method comprising: providing a turbomachine comprising: a compressor section, a fuel system, a combustion system, and an exhaust section; determining an amount of energy required for an ignition process of the combustion system; determining a heating value of a fuel consumed by the combustion system; wherein the fuel system delivers the fuel to the combustion system; utilizing an ignition algorithm to determine a required mass flowrate of the fuel; wherein the ignition algorithm compares data on the amount of energy required for the ignition process and data on the heating value of the fuel; and utilizing data on the required mass flowrate of the fuel to position a valve of the fuel system; wherein the valve allows for the fuel to flow from the fuel system to the combustion system for use in the ignition process; wherein the method automatically compensates for a change in the heating value of the fuel.

In an alternate embodiment of the present invention, a system configured for enhancing an ignition process associated with a start-up process of a gas turbine, the system comprising: a gas turbine comprising: a compressor section, a fuel system, a combustion system, and an exhaust section; and a control system adapted for controlling the gas turbine, wherein the control system performs the steps of: receiving data on a default heating value of a fuel used for an ignition process of the combustion system; determining an actual heating value of the fuel consumed by the combustion system while the gas turbine is shutting down; wherein the fuel system delivers the fuel to the combustion system; utilizing an ignition algorithm to determine a required mass flowrate of the fuel delivered to the combustion system; wherein the ignition algorithm compares data on the default heating value and data on the actual heating value of the fuel; utilizing data on the required mass flowrate of the fuel to stroke a valve of the fuel system; wherein the valve allows for the fuel to flow from the fuel system to the combustion system for use in the ignition process; and automatically adjusting the required mass flowrate after determining that the heating value of the fuel has changed.

Various aspects and embodiments of the present invention will now be described in connection with the accompanying drawings, in which:
FIG. 1 is a schematic illustrating an environment within which an embodiment of the present invention may operate.
FIG. 2 is a block diagram illustrating a method of controlling an ignition mode, in accordance with an embodiment of the present invention.
FIG. 3 is a block diagram illustrating a method of controlling an ignition mode, in accordance with an alternate embodiment of the present invention.

As discussed, "Fast Start" may be considered an operating mode of a powerplant machine. This mode generally requires the powerplant machine to export a load, while operating in emissions compliance, within a certain time after a start of that powerplant machine is initiated. As used herein, the term Fast Start is intended to include all such modes and equivalents thereof within the scope of this invention.

Various aspects of the present invention have the technical effect of enhancing the ignition mode associated with the start-up process of a turbomachine; such as, but not limiting of, a gas turbine set to operate in a Fast Start mode. The gas turbine may include, but is not limited to, a heavy-duty gas turbine, an aero-derivative gas turbine, and the like. Although embodiments of the present invention are described in relation to a gas turbine, application of the present invention is not limited to a gas turbine. Embodiments of the present invention may be applied to other industrial machines that may burn an ingested air mixed with at least one fuel, which may not be described herein.

Detailed example embodiments are disclosed herein. However, specific structural and functional details disclosed herein are merely representative for purposes of describing example embodiments. Example embodiments may, however, be embodied in many alternate forms, and should not be construed as limited to only the embodiments set forth herein.

Accordingly, while example embodiments are capable of various modifications and alternative forms, embodiments thereof are illustrated by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any, and all, combinations of one or more of the associated listed items.

The terminology used herein is for describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted might occur out of the order noted in the FIGS. Two successive FIGS., for example, may be executed substantially concurrently or may sometimes be executed in the reverse order, depending upon the functionality/operations involved.

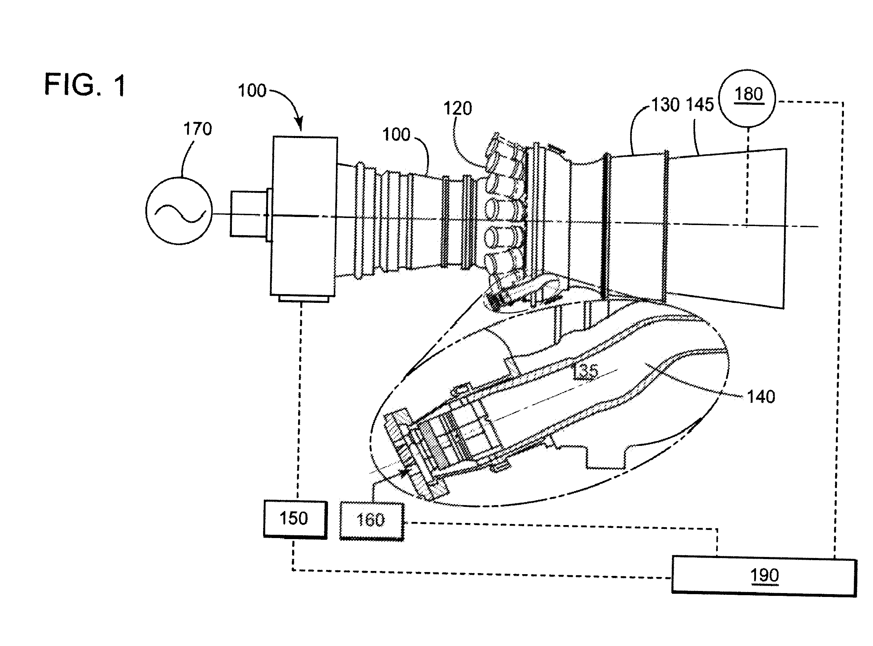

Referring now to the FIGS., where the various numbers represent like parts throughout the several views. FIG. 1 is a schematic illustrating an environment within which an embodiment of the present invention may operate. In FIG. 1, a turbomachine 100, in the form of a gas turbine, includes: a compressor section 110; a combustion system 120; a turbine section 130; an exhaust section 145; a fuel system 160; and a turbine control system 190. The combustion system 120 receives a fuel from the fuel system 160.

Generally, the compressor section 110 includes a plurality of rotating blades and stationary vanes (neither of which are illustrated) structured to compress an ingested air. Within the combustion system 120, the compressed air and fuel are mixed, ignited, and create a working fluid.

The working fluid generally proceeds downstream from the combustion system 120, through a flow path 135 of the transition section 140, to the turbine section 130. The turbine section 130 includes a plurality of rotating and stationary components (neither of which are illustrated) that convert the working fluid to a mechanical torque, which may be used to drive a load 170, such as, but not limiting of, a generator. Next the working fluid may discharge the gas turbine 100 via the exhaust section 145. As the gas turbine 100 operates some of the shaft work 170 created via the mechanical torque is used to during the compressor section 110. In addition, some of the energy generated by the gas turbine 100 is dissipated through external components. The dissipation may be considered a heat loss, or the like.

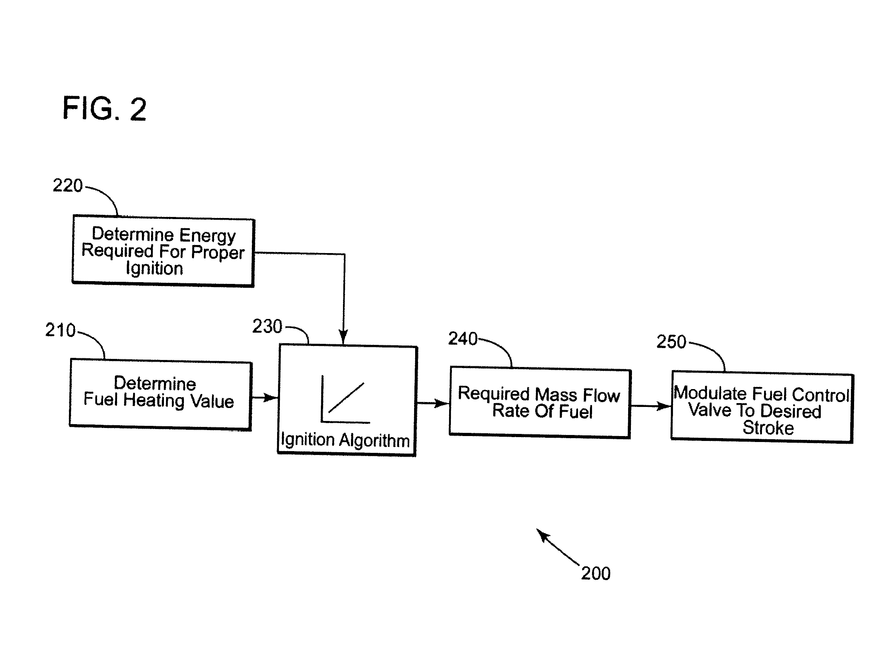

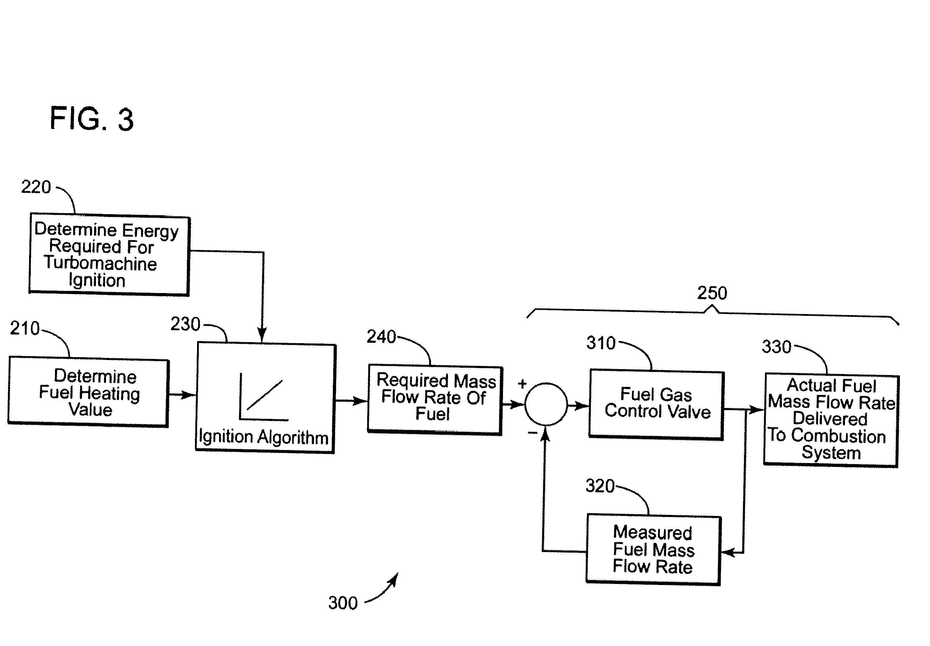

An embodiment of the invention applies a physics based approach to determine the mass flowrate of the fuel required for a robust ignition mode. This approach uses a closed-loop controls methodology. Here, the turbine control system 190 receives a plurality of operating data. The turbine control system 190 utilizes at least one algorithm, which applies an energy balance to the received operating data. The operating data may include, but is not limited to, airflow data 150, data from the fuel system 160, data related to the shaft work 170, exhaust data 180, and data related to the heat loss. As described in FIGS. 2,3 this energy balance is used to determine the required mass flow rate.

As will be appreciated, the present invention may be embodied as a method, system, or computer program product. Accordingly, embodiments of the present invention may take the form of an entirely hardware embodiment, an entirely software embodiment (including firmware, resident software, micro-code, etc.) or an embodiment combining software and hardware aspects all generally referred to herein as a "circuit", "module," or " system". Furthermore, the present invention may take the form of a computer program product on a computer-usable storage medium having computer-usable program code embodied in the medium. As used herein, the terms "software" and "firmware" are interchangeable, and include any computer program stored in memory for execution by a processor, including RAM memory, ROM memory, EPROM memory, EEPROM memory, and non-volatile RAM (NVRAM) memory. The above memory types are exemplary only, and are thus not limiting as to the types of memory usable for storage of a computer program.

Any suitable computer readable medium may be utilized. The computer-usable or computer-readable medium may be, for example but not limited to, an electronic, magnetic, optical, electromagnetic, infrared, or semiconductor system, apparatus, device, or propagation medium. More specific examples (a non exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

Computer program code for carrying out operations of the present invention may be written in an object oriented programming language such as Java7, Smalltalk or C++, or the like. However, the computer program code for carrying out operations of the present invention may also be written in conventional procedural programming languages, such as the "C" programming language, or a similar language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatuses (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a public purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory. These instructions can direct a computer or other programmable data processing apparatus to function in a particular manner. The such that the instructions stored in the computer-readable memory produce an article of manufacture including instruction means which implement the function/act specified in the flowchart and/or block diagram block or blocks. The computer program instructions may also be loaded onto a computer or other programmable data processing apparatus. These instructions may cause a series of operational steps to be performed on the computer or other programmable apparatus to produce a computer implemented process. Here, the instructions, which execute on the computer or other programmable apparatus, provide steps for implementing the functions/acts specified in the flowchart and/or block diagram blocks.

Referring again to the FIGS. FIG. 2 is a block diagram illustrating a method 200 of controlling an ignition mode, in accordance with an embodiment of the present invention. In an embodiment of the present invention, an operator may use a control system to monitor or control the operation of the method 200, via a graphical user interface (GUI) or the like.

In step 210, the method 200 may determine the heating value of the fuel used in the ignition mode. An embodiment of the method 200 may apply a physics based approach, such as, but not limiting of, the First Law of Thermodynamics, to determine the heating value. The method 200 may receive a plurality of operating data of the gas turbine 100 and then apply an energy balance to that data. The operating data may include, but is not limited to: mass flowrate and temperature of the airflow entering the compressor section, mass flowrate and temperature of the fuel flow entering the combustion section, exhaust temperature, heat loss, and shaft work generated. This operating data may correspond to the most recent turbomachine operation. The method 200 may utilize this operating data in an algorithm that determines the heating value of the fuel. This may be a very accurate heating value corresponding to the fuel most recently consumed by the gas turbine. Furthermore, this is the fuel most likely present within the fuel system during the current ignition process.

In an embodiment of the present invention, the method 200 may provide a notification of the calculated heating value. This notification may be in the form of an alarm, visual indication on the GUI, or the like. On a gas turbine 100 having a Gas Chromatograph (GC), the heating value may be compared to the measure value from the GC. Here, the method 200 may provide an operator with a means for monitoring the GC, or similar systems. This monitoring may be considered a "health check" on the operation of the GC, or similar systems that provide the heating value.

In step 220, the method 200 may determine the energy required for a proper ignition. This may considered the default heating value. As discussed, the default heating value may correspond to the fuel consumed during the commissioning of the gas turbine. Typically, the default heating value is stored within the control system that operates the gas turbine and may execute embodiments of the method 200.

In step 230, the method 200 may incorporate an ignition algorithm. Here, the method 200 may compare the measured heating value of step 210 with the default heating value of step 220. In step 240, the method 200 may use the results of this comparison to determine the required mass flowrate of the fuel.

In step 250, the method 200 may determine the required valve position necessary to allow the fuel system to deliver the required mass flowrate to the combustion system. Then, the method 200 may modulate the valve to that position. Here, embodiments of the method 200 may use different approaches to move the valve. A first approach utilizes the pressure of the fuel upstream of the valve. A second approach utilizes a closed loop flow methodology, as described below in steps 310-330 in FIG. 3.

The first approach may be considered a known conventional approach. This approach 200 utilizes stored flow characteristics of the valve, as a function of the upstream fuel pressure. Here, the method 200 may incorporate a look-up table, or the like, that correlates the upstream fuel pressure with the valve position capable of providing the required mass flowrate of the fuel.

FIG. 3 is a block diagram illustrating a method 300 of controlling an ignition mode, in accordance with an alternate embodiment of the present invention. The initial steps of the method 300 (steps 210 - 240) may be similar to the same described in FIG. 2. The present discussion therefore will focus on the second approach to move the valve. This second approach may utilize a closed loop methodology to implement step 250 of FIG. 2. This second approach may position the valve based on the feedback of a mass flowrate sensor, which may be a component of the fuel system.

In step 310, the method 300 may initially move the valve to a position based a default feedback value. Here, for example, but not limiting of, the fuel flow may be very low. To avoid wide fluctuation in the valve position, the method 300 may initially set a default value based on a last stored flowrate.

In step 320, the method 300 may measure the current mass flowrate of the fuel flowing through the valve to the combustion system, as illustrated in step 330. In an embodiment of the present invention, the mass flowrate measuring device, such as, but not limiting of, a meter, which may be positioned upstream and adjacent a fuel manifold of the combustion system. In alternate embodiment of the present invention, the fuel system may comprise a pressure transducer, or the like, which measures the pressure of the manifold. Here, the method 300 may calculate the actual fuel flow based on the manifold pressure.

Data on the measured flowrate may be sent to an algorithm, or the like, which may determine the difference between the required flowrate and the actual flowrate. Next, the method 300 may adjust the valve position with the goal of reducing that difference. In an embodiment of the present invention, the method 300 may continue this closed loop process until the ignition mode is complete.

As discussed, embodiments of the present invention may optimize the ignition mode associated with the start-up of a turbomachine. Embodiments of the present invention may significantly increase the confidence associated with starting a turbomachine under Fast Start operation.

As one of ordinary skill in the art will appreciate, the many varying features and configurations described above in relation to the several exemplary embodiments may be further selectively applied to form the other possible embodiments of the present invention. Those in the art will further understand that all possible iterations of the present invention are not provided or discussed in detail, even though all combinations and possible embodiments embraced by the several claims below or otherwise are intended to be part of the instant application. In addition, from the above description of several exemplary embodiments of the invention, those skilled in the art will perceive improvements, changes, and modifications. Such improvements, changes, and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A method of controlling a fuel flowing to a combustion system during a start-up process of a turbomachine, the method comprising:
   providing a turbomachine comprising: a compressor section, a fuel system, a combustion system, and an exhaust section;
   determining an amount of energy required for an ignition process of the combustion system;
   determining a heating value of a fuel consumed by the combustion system;
   wherein the fuel system delivers the fuel to the combustion system;
   utilizing an ignition algorithm to determine a required mass flowrate of the fuel; wherein the ignition algorithm compares data on the amount of energy required for the ignition process and data on the heating value of the fuel; and
   utilizing data on the required mass flowrate of the fuel to position a valve of the fuel system; wherein the valve allows for the fuel to flow from the fuel system to the combustion system for use in the ignition process;
   wherein the method automatically compensates for a change in the heating value of the fuel.
2. The method of clause 1, wherein the step of determining the heating value of the fuel occurs while the turbomachine is in a process of shutting down.
3. The method of any preceding clause, wherein the step of determining the heating value of the fuel utilizes an algorithm to calculate the heating value of the fuel; and wherein the algorithm receives data on:
   a mass flowrate and a temperature of air ingested by the combustion system;
   a mass flowrate and a temperature of the fuel delivered by the fuel system;
   an exhaust temperature of discharge flowing through the exhaust section;
   heat loss experienced by the turbomachine; and
   energy generated by the turbomachine.
4. The method of any preceding clause, wherein the step of determining the heating value of the fuel comprises receiving data on the heating value from a device of the fuel system.
5. The method of any preceding clause, further comprising providing a notification if a second heating value differs from a first heating value.
6. The method of any preceding clause, wherein the step of utilizing the required mass flowrate of the fuel to position a valve of the fuel system utilizes an open loop control method comprising the steps of:
   receiving data on a pressure of the fuel upstream of the valve; and
   utilizing the pressure and a valve positioning algorithm to determine a position of the valve allowing for the fuel system to deliver the required mass flowrate of the fuel.
7. The method of any preceding clause, wherein the step of utilizing the required mass flowrate of the fuel to position a valve of the fuel system utilizes a closed loop control method comprising the steps of:
   determining a difference between the required mass flowrate of the fuel with an actual mass flowrate of the fuel; and
   modulating the valve in a direction that reduces the difference.
8. The method of any preceding clause, wherein the actual mass flowrate of the fuel is determined by a fuel system meter.
9. An ignition method associated with a start-up process of a gas turbine, the method comprising:
   providing a gas turbine comprising: a compressor section, a fuel system, a combustion system, and an exhaust section;
   determining an amount of energy required for an ignition process of the combustion system;
   determining a heating value of a fuel consumed by the combustion system while the gas turbine is shutting down; wherein the fuel system delivers the fuel to the combustion system;
   determining a required mass flowrate of the fuel to be delivered to the combustion system;
   utilizing data on the required mass flowrate of the fuel to move a valve of the fuel system; wherein the valve allows for the fuel to flow from the fuel system to the combustion system for use in the ignition process; and
   automatically adjusting the required mass flowrate after determining that the heating value of the fuel has changed.
10. The method of any preceding clause, wherein the step of determining the heating value of the fuel utilizes an algorithm to calculate the heating value of the fuel; and wherein the algorithm incorporates data on:
   a mass flowrate and a temperature of air ingested by the combustion system;
   a mass flowrate and a temperature of the fuel delivered by the fuel system;
   an exhaust temperature of air flowing through the exhaust section;
   a magnitude of heat loss experienced by the turbomachine; and
   a magnitude of an energy generated by the turbomachine.
11. The method of any preceding clause, wherein the step of determining the heating value of the fuel comprises receiving heating value data from the fuel system.
12. The method of any preceding clause, further comprising the step of indicating if at least two values of the heating value differ.
13. The method of any preceding clause, wherein the step of utilizing the required mass flowrate of the fuel to position a fuel system device comprises the steps of:
   determining a pressure of the fuel upstream of the valve; and
   utilizing the pressure and an algorithm to determine a position of the valve sufficient to deliver the required mass flowrate of the fuel.
14. The method of any preceding clause, wherein the step of utilizing the required mass flowrate of the fuel to position a fuel system device comprises the steps of:
   determining a difference between the required mass flowrate of the fuel with an actual mass flowrate of the fuel; and
   modulating the valve in a direction that reduces the difference.
15. The method of any preceding clause, wherein a meter determines the actual mass flowrate of the fuel.
16. A system configured for enhancing an ignition process associated with a start-up process of a gas turbine, the system comprising:
   a gas turbine comprising: a compressor section, a fuel system, a combustion system, and an exhaust section; and
   a control system adapted for controlling the gas turbine, wherein the control system performs the steps of:
      receiving data on a default heating value of a fuel used for an ignition process of the combustion system;
      determining an actual heating value of the fuel consumed by the combustion system while the gas turbine is shutting down; wherein
      the fuel system delivers the fuel to the combustion system;
      utilizing an ignition algorithm to determine a required mass flowrate of the fuel delivered to the combustion system; wherein
      the ignition algorithm compares data on the default heating value and data on the actual heating value of the fuel;
      utilizing data on the required mass flowrate of the fuel to stroke a valve of the fuel system; wherein the valve allows for the fuel to flow from the fuel system to the combustion system for use in the ignition process; and
      automatically adjusting the required mass flowrate after determining that the heating value of the fuel has changed.
17. The system of any preceding clause, wherein the step of determining the heating value of the fuel utilizes an algorithm to calculate the heating value of the fuel; and wherein the algorithm receives data on:
   a mass flowrate and a temperature of air ingested by the combustion system;
   a mass flowrate and a temperature of the fuel delivered by the fuel system;
   an exhaust temperature of the air flowing through the exhaust section;
   a magnitude of heat loss experienced by the turbomachine; and
   a magnitude of an energy generated by the turbomachine.
18. The system of any preceding clause, wherein the control system provides a notification if at least two values of the heating value differ.
19. The system of any preceding clause, wherein the step of utilizing the required mass flowrate of the fuel to position a fuel system device comprises the steps of:
   determining a pressure of the fuel upstream of the valve; and
   utilizing the pressure and an algorithm to determine a position of the valve sufficient to deliver the required mass flowrate of the fuel.
20. The system of any preceding clause, wherein the step of utilizing the required mass flowrate of the fuel to position a fuel system device comprises the steps of:
   determining a difference between the required mass flowrate of the fuel with an actual mass flowrate of the fuel; and
   stroking the valve in a direction that reduces the difference.

## Claims

1. A method (200,300) of controlling a fuel flowing to a combustion system (120) during a start-up process of a turbomachine (100), the method (200,300) comprising:
providing a turbomachine (100) comprising: a compressor section (120), a fuel system (160), a combustion system (120), and an exhaust section (145);
determining an amount of energy required for an ignition process of the combustion system (120),(220);
determining a heating value of a fuel consumed by the combustion system (120), (220); wherein the fuel system (160) delivers the fuel to the combustion system (120);
utilizing an ignition algorithm (230) to determine a required mass flowrate of the fuel; wherein the ignition algorithm (230) compares data on the amount of energy required for the ignition process and data on the heating value of the fuel; and
utilizing data on the required mass flowrate of the fuel (240) to position a valve of the fuel system (250); wherein the valve allows for the fuel to flow from the fuel system to the combustion system (120) for use in the ignition process;
wherein the method (200,300) automatically compensates for a change in the heating value of the fuel.

2. The method (200,300) of claim 1, wherein the step of determining the heating value (210) of the fuel occurs while the turbomachine (100) is in a process of shutting down.

3. The method (200,300) of any preceding claim, wherein the step of determining the heating value of the fuel (210) utilizes an algorithm to calculate the heating value of the fuel; and wherein the algorithm receives data on:
a mass flowrate and a temperature of air ingested by the combustion system (120);
a mass flowrate and a temperature of the fuel delivered by the fuel system(160);
an exhaust temperature of discharge flowing through the exhaust section (145);
heat loss experienced by the turbomachine (100); and
energy generated by the turbomachine (100).

4. The method (200,300) of any preceding claim, wherein the step of determining the heating value of the fuel (210) comprises receiving data on the heating value from a device of the fuel system (160).

5. The method (200,300) of any preceding claim, further comprising providing a notification if a second heating value differs from a first heating value.

6. The method (200,300) of any preceding claim, wherein the step of utilizing the required mass flowrate of the fuel to position a valve (250) of the fuel system utilizes an open loop control method (200,300) comprising the steps of:
receiving data on a pressure of the fuel upstream of the valve; and
utilizing the pressure and a valve positioning algorithm to determine a position of the valve allowing for the fuel system (160) to deliver the required mass flowrate of the fuel.

7. The method (200,300) of any preceding claim, wherein the step of utilizing the required mass flowrate of the fuel (250) to position a valve of the fuel system (160) utilizes a closed loop control method comprising the steps of:
determining a difference between the required mass flowrate of the fuel with an actual mass flowrate of the fuel (310,320); and
modulating the valve in a direction that reduces the difference (330).

8. The method (200,300) of any preceding claim, wherein the actual mass flowrate of the fuel is determined by a fuel system meter.

9. A system configured for enhancing an ignition process associated with a start-up process of a gas turbine (100), the system comprising:
a gas turbine (100) comprising: a compressor section (110), a fuel system (160), a combustion system (120), and an exhaust section (145); and
a control system (190) adapted for controlling the gas turbine (100),
wherein the control system (190) performs the steps of:
receiving data on a default heating value of a fuel used for an ignition process of the combustion system (120), (210);
determining an actual heating value of the fuel consumed (210) by the combustion system while the gas turbine (100) is shutting down; wherein the fuel system (160) delivers the fuel to the combustion system (120);
utilizing an ignition algorithm (230) to determine a required mass flowrate (240) of the fuel delivered to the combustion system (120); wherein the ignition algorithm (230) compares data on the default heating value and data on the actual heating value of the fuel;
utilizing data on the required mass flowrate of the fuel (240) to stroke a valve of the fuel system (160); wherein the valve allows for the fuel to flow from the fuel system (160) to the combustion system (120) for use in the ignition process; and
automatically adjusting the required mass flowrate after determining that the heating value of the fuel has changed.

10. The system of claim 9, wherein the step of determining the heating value (210) of the fuel utilizes an algorithm to calculate the heating value of the fuel; and wherein the algorithm receives data on:
a mass flowrate and a temperature of air ingested by the combustion system (120).
a mass flowrate and a temperature of the fuel delivered by the fuel system (160);
an exhaust temperature of the air flowing through the exhaust section (145);
a magnitude of heat loss experienced by the gas turbine (100); and
a magnitude of an energy generated by the gas turbine (100).
